# EUROPÄISCHE PATENTSCHRIFT

(11) **EP 2 800 622 B1**
(45) Veröffentlichungstag und Bekanntmachung des Hinweises auf die Patenterteilung: **23.12.2015**
(21) Anmeldenummer: 12818784.6
(22) Anmeldetag: 27.12.2012
(51) Int. Cl.: B01F 7/04, B01F 15/02, B01F 15/06

(54) **VORRICHTUNG ZUR DURCHFÜHRUNG VON MECHANISCHEN, CHEMISCHEN UND/ODER THERMISCHEN PROZESSEN**
DEVICE FOR CARRYING OUT MECHANICAL, CHEMICAL, AND/OR THERMAL PROCESSES
DISPOSITIF DE MISE EN OEUVRE DE PROCESSUS MÉCANIQUES, CHIMIQUES ET/OU THERMIQUES

(30) Priorität: 05.01.2012 DE 102012100085; 18.07.2012 DE 102012106488; 27.07.2012 DE 102012106872
(43) Veröffentlichungstag der Anmeldung: 12.11.2014
(73) Patentinhaber: LIST Holding AG, 4422 Arisdorf (CH)
(72) Erfinder: FLEURY, Pierre-Alain, CH-4433 Ramlinsburg (CH); KUNKEL, Roland, 60316 Frankfurt a.M. (DE)
(74) Vertreter: Patentanwälte und Rechtsanwalt Weiß, Arat & Partner mbB
(86) Internationale Anmeldenummer: PCT/EP2012/076928
(87) Internationale Veröffentlichungsnummer: WO 2013/102601

(56) Entgegenhaltungen:
- WO-A2-2010/034446
- DE-A1- 19 536 944
- JP-A- 55 152 534
- US-A- 5 887 976

## Beschreibung

Die vorliegende Erfindung betrifft eine Vorrichtung zur Durchführung von mechanischen, chemischen und/oder thermischen Prozessen in einem Gehäuse mit Misch- und Putzelementen an zumindest zwei Wellen, wobei die Misch- und Putzelemente der Wellen ineinander greifen und Scheibenelemente mit Knetbarren aufweisen.

### Stand der Technik

Derartige Vorrichtungen werden auch als Mischkneter bezeichnet. Sie dienen sehr vielfältigen Zwecken. Als erstes ist das Eindampfen mit Lösungsmittelrückgewinnung zu erwähnen, welches chargenweise oder kontinuierlich und oft auch unter Vakuum erfolgt. Hierdurch werden beispielsweise Destillationsrückstände und insbesondere Toluoldiisocyanate behandelt, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen.

Mit den Apparaten wird ferner eine kontinuierliche oder chargenweise Kontakttrocknung, wasser- und/oder lösemittelfeuchter Produkte, oftmals ebenfalls unter Vakuum, durchgeführt. Die Anwendung ist vor allem gedacht für Pigmente, Farbstoffe, Feinchemikalien, Additive, wie Salze, Oxyde, Hydroxyde, Antioxidantien, temperaturempfindliche Pharma- und Vitaminprodukte, Wirkstoffe, Polymere, synthetische Kautschuke, Polymersuspensionen, Latex, Hydrogele, Wachse, Pestizide und Rückstände aus der chemischen oder pharmazeutischen Produktion, wie Salze, Katalysatoren, Schlacken, Ablaugen gedacht. Anwendung finden diese Verfahren auch in der Lebensmittelproduktion, beispielsweise bei der Herstellung und/oder Behandlung von Blockmilch, Zuckeraustauschstoffen, Stärkederivaten, Alginaten, zur Behandlung von Industrieschlämmen, Ölschlämmen, Bioschlämmen, Papierschlämmen, Lackschlämmen und allgemein zur Behandlung von klebrigen, krustenden zähpastösen Produkte, Abfallprodukten und Zellulosederivaten.

In einem Mischkneter kann eine Polykondensationsreaktion, meist kontinuierlich und meist in der Schmelze, stattfinden und wird vor allem verwendet bei der Behandlung von Polyamiden, Polyester, Polyacetaten, Polyimiden, Thermoplaste, Elastomere, Silikone, Harnstoffharze, Phenolharze, Detergentien und Düngemittel. Zum Beispiel findet sie Anwendung auf Polymerschmelzen nach einer Massepolymerisation auf Derivate der Methacrylsäure.

Stattfinden kann auch eine Polymerisationsreaktion, ebenfalls meist kontinuierlich. Dies wird angewendet auf Polyacrylate, Hydrogele, Polyole, thermoplastische Polymere, Elastomere, syndiotaktisches Polystyrol und Polyacrylamide.

In Mischknetern kann ein Entgasen und/oder Devolatilisieren stattfinden. Angewendet wird dies auf Polymerschmelzen, nach (Co-) Polymerisation von Monomer(en), nach Kondensation von Polyester oder Polyamidschmelzen, auf Spinnlösungen für synthetische Fasern und auf Polymer- oder Elastomergranulate bzw. -pulver im festen Zustand.

Ganz allgemein können im Mischkneter feste, flüssige oder mehrphasige Reaktionen stattfinden. Dies gilt vor allem für Backreaktionen, bei der Behandlung von Flusssäure, Stearaten, Cyaniden, Polyphosphaten, Cyanursäuren, Zellulosederivaten, -ester, -äther, Polyacetalharzen, Sulfanilsäuren, Cu-Phthalocyaninen, Stärkederivaten, Ammoniumpolyphosphaten, Sulfonaten, Pestiziden und Düngemittel.

Des weiteren können Reaktionen fest-/gasförmig (z.B. Karboxylierung) oder flüssig-/gasförmig stattfinden. Angewendet wird dies bei der Behandlung von Acetaten, Aciden, Kolbe-Schmitt-Reaktionen, z.B. BON, Na-Salicylaten, Parahydroxibenzoaten und Pharmaprodukten.

Reaktionen flüssig/flüssig erfolgen bei Neutralisationsreaktionen und Umesterungsreaktionen.

Ein Lösen und/oder Entgasen in derartigen Mischknetern findet bei Spinnlösungen für synthetische Fasern, Polyamiden, Polyester und Zellulosen statt.

Ein sogenanntes Flushen findet bei der Behandlung bzw. Herstellung von Pigmenten statt.

Eine Solid-State-Nachkondensation findet bei der Herstellung bzw. Behandlung von Polyester, Polycarbonaten und Polyamiden statt, ein kontinuierliches Anmaischen z.B. bei der Behandlung von Fasern, z.B. Zellulosefasern mit Lösungsmitteln, eine Kristallisation aus der Schmelze oder aus Lösungen bei der Behandlung von Salzen, Feinchemikalien, Polyolen, Alkoholaten, ein Compoundieren, Mischen (kontinuierlich und/oder chargenweise) bei Polymeren-Mischungen, Silikonmassen, Dichtmassen, Flugasche, ein Koagulieren (insbesondere kontinuierlich) bei der Behandlung von Polymersuspensionen.

In einem Mischkneter können auch multifunktionale Prozesse kombiniert werden, beispielsweise Erhitzen, Trocknen, Schmelzen, Kristallisieren, Mischen, Entgasen, Reagieren - dies alles kontinuierlich oder chargenweise. Hergestellt bzw. behandelt werden dadurch Polymere, Elastomere, anorganische Produkte, Rückstände, Pharmaprodukte, Lebensmittelprodukte, Druckfarben.

In Mischknetern kann auch eine Vakuumsublimation/ Desublimation stattfinden, wodurch chemische Vorprodukte, z.B. Anthrachinon, Metallchloride, Ferrozene, Jod, metallorganische Verbindungen usw. gereinigt werden. Ferner können pharmazeutische Zwischenprodukte hergestellt werden.

Eine kontinuierliche Trägergas-Desublimation findet z.B. bei organischen Zwischenprodukten, z.B. Anthrachinon und Feinchemikalien statt.

Im Wesentlichen werden einwellige und zweiwellige Mischkneter unterschieden. Eine mehrwellige Misch- und Knetmaschine wird in der CH-A 506 322 beschrieben. Dort befinden sich auf einer Welle radiale Scheibenelemente und zwischen den Scheiben angeordnete axial ausgerichtete Knetbarren. Zwischen diese Scheiben greifen von der anderen Welle rahmenartig geformte Misch- und Knetelemente ein. Diese Misch- und Knetelemente reinigen die Scheiben und Knetbarren der ersten Welle. Die Knetbarren auf beiden Wellen reinigen wiederum die Gehäuseinnenwand.

Diese bekannten zweiwelligen Mischkneter haben den Nachteil, dass sie aufgrund des achtförmigen Gehäusequerschnitts im Bereich der Verbindung der beiden Wellengehäuse eine Schwachstelle aufweisen. In diesem Bereich entstehen bei der Verarbeitung zäher Produkte und/oder bei Prozessen, die unter Druck ablaufen, hohe Spannungen, die nur durch aufwendige konstruktive Massnahmen beherrscht werden können.

Ein Mischkneter der oben genannten Art ist beispielsweise aus der EP 0 517 068 B1 bekannt. Bei ihm drehen in einem Mischergehäuse zwei achsparallel verlaufende Wellen entweder gegensinnig oder gleichsinnig. Dabei wirken auf Scheibenelementen aufgesetzte Mischbarren miteinander. Neben der Funktion des Mischens haben die Mischbarren die Aufgabe, produktberührte Flächen des Mischergehäuses, der Wellen und der Scheibenelemente möglichst gut zu reinigen und damit ungemischte Zonen zu vermeiden. Insbesondere bei stark kompaktierenden, aushärtenden und krustenden Produkten führt die Randgängigkeit der Mischbarren zu hohen örtlichen mechanischen Belastungen der Mischbarren und der Wellen. Diese Kraftspitzen treten insbesondere beim Eingriff der Mischbarren in denjenigen Zonen auf, wo das Produkt schlecht ausweichen kann. Solche Zonen sind z.B. dort gegeben, wo die Scheibenelemente auf der Welle aufgesetzt sind.

Ferner ist aus der DE 199 40 521 A1 ein Mischkneter der o.g. Art bekannt, bei welchem die Tragelemente im Bereich der Knetbarren eine Ausnehmung ausbilden, damit der Knetbarren eine möglichst grosse axiale Erstreckung aufweist. Ein derartiger Mischkneter hat eine hervorragende Selbstreinigung aller produktberührten Flächen des Gehäuses und der Wellen, hat aber die Eigenschaft, dass die Tragelemente der Knetbarren aufgrund der Bahnen der Knetbarren Ausnehmungen erforderlich machen, die zu komplizierten Tragelementformen führen. Daraus resultieren zum einen ein aufwendiges Herstellungsverfahren und zum zweiten bei einer mechanischen Beanspruchung lokale Spannungsspitzen an der Welle und den Tragelementen. Diese Spannungsspitzen, welche hauptsächlich bei den scharfkantigen Ausnehmungen und Dickenänderungen, insbesondere im Bereich, wo die Tragelemente auf den Wellenkern aufgeschweisst sind, auftreten, sind Auslöser für Risse in der Welle und den Tragelementen aufgrund von Materialermüdung.

Die vorliegende Vorrichtung soll sich vor allem auf einen Mischkneter zur Herstellung eines superabsorbierenden Polymeres (SAP) beziehen. Bislang werden hierfür nur zweiwellige, gegenläufig mit Drehverhältnis 4:1 drehende Mischkneter verwendet. Diese Kinematik führt zu unerwünschten Auswirkungen, nämlich ungenügenden Selbstreinigungseigenschaften, Produkt-Kurzschluss und Drehmomentspitzen, insbesondere wenn zum Beispiel SAP Pulver recycelt werden soll.

Die Selbstreinigung des Gehäuses liegt bei derartigen Mischknetern zwar bei etwa 100%, jedoch ist die Reinigung der Wellen ungenügend, um Polymerablagerungen zu vermeiden. Es bilden sich Todzonen, die das Polymer höheren Temperaturen ausgesetzt lassen, so dass sich innerhalb dieser Bereiche, basierend auf exothermischen Reaktionen Hot Spots ausbilden. Dieses besonders heisse Polymer verfärbt sich gelblich bis braun, fällt nach einigen Tagen ab und verunreinigt das gute Produkt. Dieses verfärbte Polymer zerbricht auch beim Herunterfallen in grosse Stücke. Diese sind so gummiartig, dass sie in dieser Grösse verbleiben, auch wenn sie zwischen den Knetelementen hindurchgequetscht werden. Eine Möglichkeit, um diese Stücke in kleinere Stücke zu zerbrechen, ist, den Mischkneter bei einem hohen Füllgrad laufen zu lassen, um diese Stücke durch die schmalsten Spalten hindurch zu drängen. Dies hilft zwar, löst aber nicht das Problem. Zwei Konsequenzen können festgestellt werden:
- Eine nachfolgende Trocknungsstufe ist überfordert, um diese grossen Stücke komplett zu trocknen, oder aber eine Einrichtung muss zwischen Mischkneter und Trockner installiert werden, um die Stücke klein zu schneiden, wobei ein derartiges Gerät eine intensive Wartung benötigt.
- Der Mischkneter leidet unter Überbelastung infolge des zu hohen Füllgrads und der dadurch auftretenden Friktion im Produkt.

Die gegenläufig drehenden Wellen erzeugen ferner lokale Kräfte, wenn ein festes Pulver in die Polymermasse z.B. mit Eintragdoppelschnecken eingegeben wird. Festes Pulver ist zum Beispiel recyceltes SAP und optional ein Füllstoff. Wenn beide Wellen mit dem Polymer als festem Pulver zusammenwirken, wird der lokale Druck so hoch, dass schon nach wenigen Monaten der Tätigkeit an den Knetelementen Brüche auftreten können. Die Wellen selbst können ebenfalls überlastet werden. Festpulver wird auch benutzt in grosser Menge, um das Problem der Klumpen zu lösen. Der Friktionskoeffizient des Festpulvers hilft dabei, Knetenergie in die grossen Polymerstücke einzutragen. Auch das eliminiert aber nicht die Klumpen, sondern erhöht das Drehmoment.

Der Mischkneter 4:1 wird bei hohem Füllgrad gefahren, um auch den Kurzschluss von Polymerstücken zu vermeiden. Die schnellere Welle hat die Tendenz, die oben schwimmenden Stücke schnell gegen den Austrag zu fördern. Ein hoher Füllgrad gegen 1 bremst diese Polymerstücke, so dass sie länger im Kneter bleiben, um zerkleinert zu werden.

Aus der WO 2010/034446 A2 ist ein Mischkneter bekannt, bei dem auf einer drehenden Welle Misch- und Putzelemente aufeinanderfolgend verdreht zueinander angeordnet sind. Diese Welle wirkt mit einer zweiten Welle zusammen, wobei die beiden Wellen auch gleichsinnig drehen können.

### Aufgabe

Aufgabe der vorliegenden Erfindung ist es, eine Vorrichtung der oben genannten Art, die nachfolgend als Mischkneter bezeichnet werden soll, wesentlich zu verbessern und zwar im Hinblick auf die Behandlung des Produktes, auf die Abreinigung der mit dem Produkt in Berührung kommenden Flächen und auch auf die Drehmomentspitzen beim Pulverdosieren, sowie den Austrag des Produktes. Dabei soll sich die Vorrichtung vor allem auf die Herstellung von SAP beziehen. Die Erfindung ermöglicht einen normalen Füllgrad, um die Maschine zu entleeren.

### Lösung der Aufgabe

Zur Lösung der Aufgabe führt, dass die Vorrichtung die Merkmale des Anspruchs 1 enthält.

Durch diesen erfindungsgemäss Mischkneter wird die Selbstreinigung erheblich verbessert. Während bei den bislang verwendeten gegenläufigen Reaktoren zwischen den Scheibenelementen Totzonen entstanden, die bis über 60% in den freien Raum in Richtung Innenwand des Gehäuses wachsen konnten, geschieht dies bei dem erfindungsgemässen Reaktor nicht weiter als 18-20% der Raumtiefe. Die Totzonen sind mindestens zweimal geringer in ihrem Volumen verglichen mit den Standardreaktoren. Aber der Hauptvorteil der verbleibenden Totzonen liegt darin, dass diese nicht breit genug im Raum oder konzentriert genug an einer Stelle sind. Hierdurch werden Hot Spots in den Totzonen vermieden. Hierdurch geschieht auch keine Verunreinigung des guten Produktes, so dass die geforderten Standards erreicht werden.

Auch das Recycling von SAP Rückständen geschieht leichter in dem neuen Reaktor. In der Praxis konnte demonstriert werden, dass der lokale Druck auf die Knetelemente zweimal niedriger ist als bei den gegenläufig rotierenden Wellen. Dieser Vorteil erlaubt die Zugabe von Füller kombiniert mit SAP Festpulver an derselben Stelle des Reaktors. Hier wird gewöhnlich eine mit Stickstoff gespülte Doppelschnecke benutzt, um das Zugabematerial in den Mischkneter einzugeben. Die Zugabe erfolgt üblicherweise in der zweiten Hälfte des Reaktors, wenn die Monomerumwandlung bereits relativ hoch ist.

Für das Verhältnis der Drehgeschwindigkeiten der beiden Wellen zueinander wurde herausgefunden, dass das Verhältnis 1:1 oder von 4:5 oder 2:3 am besten geeignet ist. Bei dem Verhältnis von 2:3 zum Beispiel sind sechs Umdrehungen notwendig, bevor sich die Mischelemente wieder treffen. Hierdurch erfolgt ein besseres Einmischen des zugegebenen Materials in das Polymer. Des weiteren soll die Drehgeschwindigkeit der schnelleren Welle max. 1.5 mal schneller als die der anderen Welle sein, um jede Schnellbahn (Beschleunigung) zu vermeiden, die Produktkurzschlüsse schaffen könnte.

Erfindungsgemäss sind die Scheibenelemente mit mehreren Spitzen ausgestaltet. Dabei weist erfindungsgemäss jedes Scheibenelement soviel Spitzen auf, wie die Verhältniszahl der Drehgeschwindigkeit zueinander. Ist somit die Drehgeschwindigkeit 2:3, so weist ein Scheibenelement zwei Spitzen auf, das zweite Scheibenelement drei Spitzen. Dementsprechend sind auch die Scheibenelemente selbst ausgestaltet, da die Spitzen jeweils miteinander entsprechend verbunden werden. Das Scheibenelement mit zwei Spitzen ist einer Ellipse nachempfunden, das Scheibenelement mit drei Spitzen einem Dreistern. Das Scheibenelement mit vier Spitzen entspricht in etwa einem Quadrat, usw.

Bevorzugt sind auf den Wellen die jeweiligen Scheibenelemente auch verdoppelt vorgesehen, wobei sie direkt aufeinanderfolgen oder nur einen geringfügigen Abstand auf der Welle voneinander einhalten. Erfindungsgemäss sind sie auch gegeneinander verdreht angeordnet, wobei die Verdrehung jeweils 360° dividiert durch die jeweilige Anzahl der Spitzen entspricht.

Zumindest eine der Wellen soll auf wenigstens einer Seite doppelt gelagert sein, um die Wellen zu entlasten. Vor allem wird durch die doppelte Lagerung der Welle die Eigenschwingung der Welle gedämpft. Dabei kann es sich als ratsam erweisen, zwischen die Welle und die entsprechenden beiden Lager eine Hülse dazwischen zu schalten. Hierdurch wird die Aufnahme der Welle im Lagerbereich vereinfacht. Muss die Welle repariert werden, kann sie leichter ausgetauscht werden.

Ferner soll zumindest eine der Wellen aus einem geschmiedeten und gedrehten/gefrästen Rohrstück hergestellt sein, um die Schweissnähte aus dem Wellenkern zu entfernen.

Das Gehäuse soll bevorzugt ein L/D Verhältnis von max. 5.3 aufweisen, um die Wellen zu entlasten.

Im Übrigen verbessert die neue Konfiguration des Reaktors die Mikromischung im Zugabebereich des Reaktors. Dies gilt zum Beispiel in dem Fall, wenn Ascorbinsäure zugegeben wird, welche gut mit dem Monomer vermischt werden muss.

Erfindungsgemäss sollen die Misch- und Putzelemente jeweils aus einem Scheibenelement bestehen und das Scheibenelement eine äussere Randkante aufweisen, die um einen Radius in einem Bogensegment von etwa 90° oder geringfügig darüber um die Achse der Welle verläuft und an die beidseits zur Welle hin verlaufende Seitenkanten anschliessen, wobei auf der Randkante jeweils ein oder mehrere Barren aufsitz/en. Die Knetbarren weisen bevorzugt scharfe Kanten auf, damit diese die Produktpartikel in den Eingriffzonen schneiden können.

Bei dieser Ausgestaltung kann nicht mehr, wie im Stand der Technik noch üblich, zwischen einer Putz- und einer Rührwelle unterschieden werden. Die Misch- und Putzelemente auf beiden Wellen haben sowohl Misch- als auch Putzaufgaben. Es erfolgt durch sie eine intensive und weitestgehende Abreinigung sämtlich mit dem Produkt in Berührung kommenden Flächen und Elementen. Dies gilt sowohl für die Innenwand des Gehäuses als auch für Misch- und Putzelemente selbst als auch für den Mantel der Wellen.

Bevorzugt sollen die Misch- und Putzelemente auf beiden Wellen identisch ausgebildet sein. Dies vereinfacht nicht nur die Herstellung und Wartung, sondern führt auch zu einer gleichmässigen Belastung der einzelnen Arbeitselemente, bspw. von Barren als Teile der Misch- und Putzelemente.

Ein wesentliches Merkmal der vorliegenden Erfindung bezieht sich auch auf die Ausgestaltung der Misch- und Putzelemente. Diese setzen sich jeweils aus einem Scheibenelement und zumindest einem, diesem Scheibenelement aufgesetzten, in axialer Richtung verlaufenden Barren zusammen. Die Scheibenelemente sind dabei aber bevorzugt so ausgestaltet, dass sie nur einen Teil des Knetraumes und, da sie um 180° drehsymmetrisch zueinander versetzt an der Achse angeordnet sind, auch nur immer einseitig den Knetraum begrenzen. Dies führt dazu, dass der Produktstrom wie in einem Labyrinth radial hin und her bei seiner Förderung von einem Eintrag zu einem Austrag geführt wird. Damit ist eine optimale Radialmischung gegeben, die bisher so nicht bekannt war. Dies vermeidet einen Kurzschluss vom Produkt.

Des weiteren wird durch die Anordnung der Scheibenelemente der Misch- und Putzelemente auch ein durchgängiger Gasraum geschaffen, was zu einer wesentlich verbesserten Austragung von verdampftem Lösungsmittel/Wasser od. dgl. führt.

In einem besonders bevorzugten Ausführungsbeispiel weisen die Scheibenelemente eine äussere Randkante auf, die um einen Radius um die Achse der Welle verläuft. Dabei überdeckt das Scheibenelement in etwa ein Bogensegment von 90° oder geringfügig darüber.

Ferner ist vorgesehen, dass der Randkante des Scheibenelements bevorzugt beidends ein Barren aufgesetzt ist. Eine Abreinigung kann dadurch verbessert werden, dass sogar zwischen den beiden Barren ein Mittelbarren vorgesehen ist.

Ferner hat sich in der Praxis herausgestellt, dass die gleichen Geometrien beider Wellen und der Misch- und Putzelemente auf ihnen dazu führen, dass der Produktstrom wesentlich gleichmässiger fliesst. Ferner ist durch die gewählte Anordnung ein hoher Selbstreinigungseffekt gegeben, der wiederum auch zu einer besseren (engeren) Verweilzeitverteilung und gleichzeitig zu intensiver Misch- und Knetwirkung führt.

Im Übrigen erlauben die gewählten Misch- und Putzelemente auch die Möglichkeit einer sehr guten Rückmischung, sofern die Förderelemente, insbesondere die Barren, entsprechend angestellt werden. Dementsprechend ist die gewählte Anordnung auch für Batch-Maschinen ideal.

Zumindest eine Welle soll aktiv heiz- oder kühlbar sein. Damit wird die Wärmeübertragung in das Produkt verbessert. Gedacht ist sogar daran, dass zumindest eine Welle in zwei unterschiedliche Wärmeübertragungszonen aufgeteilt ist, was ein Aufheizen der zugegebenen Masse ermöglicht und, wenn es exothermisch geschieht, ein Herunterkühlen des Produktes neben der Verdunstungskühlung.

Der Reaktor wird unter Vakuum, unter Normaldruck oder unter Überdruck betrieben, um die Reaktionswärme herunter zu kühlen durch Verdunstung von Wasser bei einer vorgegebenen Temperatur.

Des Weiteren ist es möglich, dass der Austragsöffnung eine ein- oder mehrwellige Austragsschnecke zugeordnet wird. Diese Austragsschnecken können gegebenenfalls über Wägezellen geregelt werden, um den Füllgrad des Reaktors zu regulieren. Sie können horizontal oder vertikal angeordnet sein, an der Stirnwand oder am Gehäuse.

Bevorzugte soll der Austragsschnecke ein Dampfabzug zugeordnet werden, insbesondere in ihrem oberen Bereich oder antriebsseitig, um den Dampf abzuziehen, der sich aus der Verdampfungskühlung ergibt.

Ein weiterer Erfindungsgedanke bezieht sich darauf, der Vorrichtung bzw. dem Gehäuse Wägezellen zuzuordnen, mit denen der Inhalt/Hold-Up des Gehäuses ermittelt wird. In einem bevorzugten Ausführungsbeispiel der Erfindung ist dieser Inhalt/Hold-Up über die Drehzahl der Austragsschnecke steuerbar, d.h., soll ein Inhalt des Gehäuses erhöht werden, wird die Drehzahl der Austragsschnecke verlangsamt, im umgekehrten Fall beschleunigt.

Umgedreht kann natürlich auch ein Füllgrad der Vorrichtung konstant gehalten werden, indem die Drehzahl der Austragsschnecke über das Signal der Wägezellen gesteuert wird. Droht der Füllgrad abzunehmen, wird die Drehzahl verlangsamt. Droht der Füllgrad zuzunehmen, wird die Drehzahl erhöht und damit der Austrag beschleunigt.

In einem weiteren bevorzugten Ausführungsbeispiel ist daran gedacht, das Drehmoment der Wellen zu überwachen. Eine Abweichung des Drehmoments der Wellen zeigt einen möglichen Fehler beim durchgeführten Verfahren an. Die Rezeptur der zugegebenen Zutaten (Neutralisationsanteil, Vernetzen Redox und thermische Initiatoren, Inertisierung, Kontamination, Anteil recycliertes SAP Pulver, Anteil Füllstoff), kann somit online überwacht werden. Das gemessene Drehmoment für einen bestimmten Füllgrad wird ein während dem Betrieb messbarer Qualitätsparameter.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Frontansicht einer erfindungsgemässen Vorrichtung zur Durchführung von mechanischen, chemischen und/oder thermischen Prozessen (Mischkneter) mit abgenommener Stirnscheibe;
Figur 2 einen teilweise dargestellten Längsschnitt durch einen Mischkneter ähnlich Figur 1;
Figur 3 eine schematische Darstellung eines Teils einer Abwicklung eines Mischkneters gemäss den Figuren 1 und 2;
Figur 4 einen teilweise dargestellten Längsschnitt durch eine erfindungsgemässe Vorrichtung gemäss Figur 1;
Figur 5 eine schematische Ansicht von zwei ineinandergreifenden Wellen eines erfindungsgemässen Mischkneters mit einem Drehzahlverhältnis von 2:3;
Figur 6 eine schematische Ansicht von zwei ineinandergreifenden Wellen eines erfindungsgemässen Mischkneters mit einem Drehzahlverhältnis von 3:3;
Figur 7 eine schematische Ansicht von zwei ineinandergreifenden Wellen eines erfindungsgemässen Mischkneters mit einem Drehzahlverhältnis von 3:4.

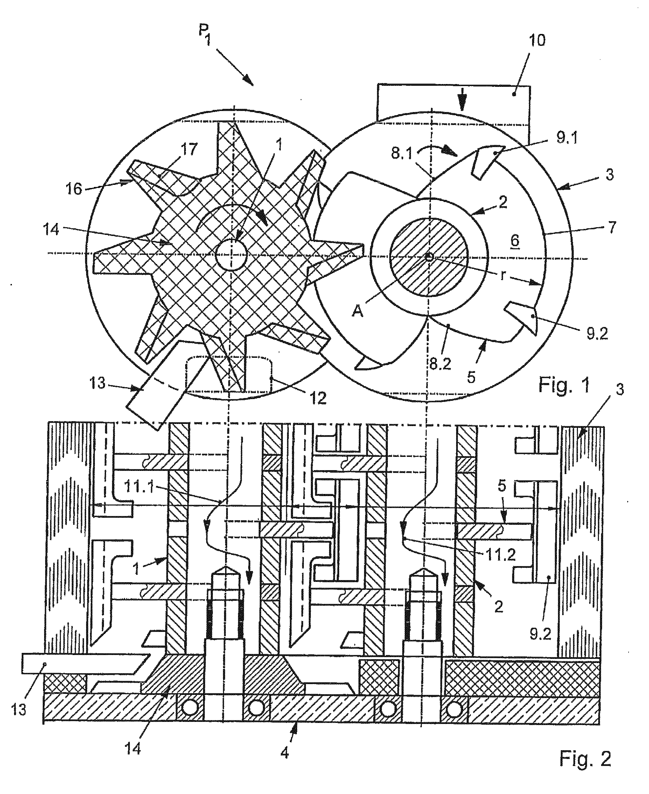

Gemäss den Figuren 1 und 2 befinden sich bei einem Mischkneter P1 zwei Wellen 1 und 2 in einem Gehäuse 3, wobei sowohl die Wellen 1 und 2 als auch das Gehäuse 3 mit einem temperierten Medium gefüllt sein können. Hierzu ist dann das Gehäuse 3 als ein Doppelmantelgehäuse ausgebildet. Frontseitig wird das Gehäuse 3 durch eine Stirnplatte 4 verschlossen.

Auf den Wellen 1 und 2 sitzen Misch- und Putzelemente 5, wobei diese im Wesentlichen identisch ausgebildet sind. Sie bestehen aus einem Scheibenelement 6, welches eine Randkante 7 aufweist, die in etwa in einem Radius r um eine Achse A der Welle 1 bzw. 2 und in einem Bogensegment von etwa 90° herum verläuft. Von der Randkante 7 verlaufen dann bogenförmig Seitenkanten 8.1 und 8.2 zu der Welle 1 bzw. 2 hin. Derartige Scheibenelemente sind aufeinanderfolgend um 180° drehsymmetrisch auf der Welle 1 bzw. 2 angeordnet.

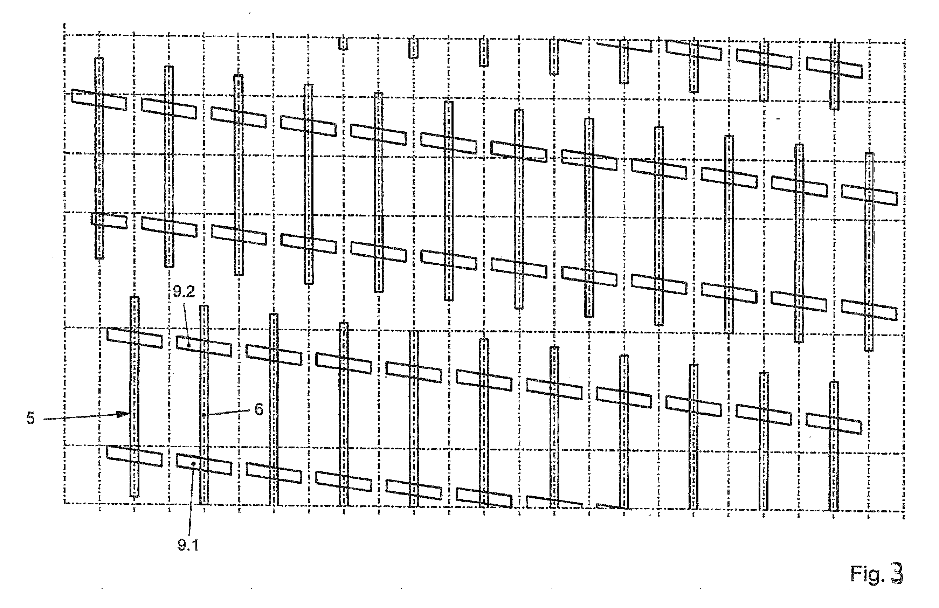

Des weiteren ist erkennbar, dass die Randkante 7 von zwei Barren 9.1 und 9.2 besetzt ist, die in etwa parallel zur Achse A verlaufen, jedoch in den in Figur 3 gezeigten Abwicklungen schräg angestellt sind. Hierdurch kann die Fördertätigkeit für das zu bearbeitende Produkt beeinflusst werden.

Die Funktionsweise der vorliegenden Erfindung ist folgende:
Ein zu behandelndes Produkt gelangt über einen Eintrag 10 in das Innere des Gehäuses 3 und wird dort von den sich drehenden Misch- und Putzelementen 5 auf den Wellen 1 und 2 erfasst. Dabei wird das Produkt durch die Misch- und Putzelemente 5 intensiv geknetet und geschert, so dass es mit anderen Produkten, Zusätzen, Lösungsmitteln, Katalysatoren, Initiatoren usw. intensiv vermischt werden kann. Im Gegensatz zu bekannten Mischknetern kann bei der vorliegenden Erfindung nicht mehr zwischen einer Rührwelle mit Rührelementen und einer Putzwelle mit Putzelementen unterschieden werden. Gemäss der vorliegenden Erfindung übernehmen die Wellen 1 und 2 mit ihren Misch- und Putzelementen in gleichem Masse das Mischen des Produktes und das Putzen der anderen Welle bzw. der Innenwand des Gehäuses bzw. der Misch- und Putzelemente auf der anderen Welle.

Durch die beschriebene Anordnung der Scheibenelemente und deren Ausgestaltung wird eine optimale Radialmischung verwirklicht und insbesondere ein sogenannter Labyrintheffekt ermöglicht, wie er durch die Pfeile 11.1 und 11.2 für das Produkt dargestellt ist. Dabei wird vorausgesetzt, dass beide Wellen in einem Verhältnis von 1:1 gleichsinnig, im vorliegenden Fall im Uhrzeigersinn drehen.

Sobald das Produkt in Richtung der Stirnplatte 4 gelangt, d.h., zu einem gestrichelt angedeuteten Austrag 12, soll es erfindungsgemäss zu diesem Austrag 12 hin abgelenkt werden. Dies geschieht durch einen Deflektor 13 im Zusammenwirken mit einem Austragsstern 14. Während der Deflektor 13 statisch im Gehäuse festliegt, dreht sich der Austragsstern 14 mit der Welle 1 mit, wobei der Austragsstern mit einer Mehrzahl von Schneidzacken versehen ist, die das auszutragende Produkt in die Austragsöffnung 12 hineindrücken. Die Schneidzacken besitzen in Drehrichtung Schneiden 17. Hierdurch wird von dem Produktstrom immer eine Portion abgeschnitten und durch die Austragsöffnung 12 gedrückt.

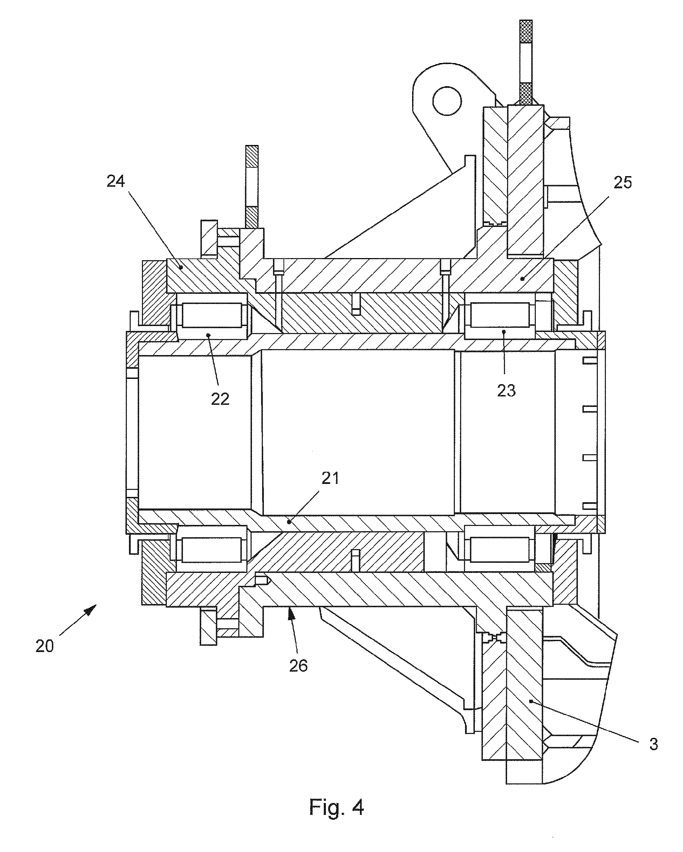

In Figur 4 ist ein Teil der erfindungsgemässen Vorrichtung insbesondere im Bereich einer Lagerlaterne 20 dargestellt. In dieser Lagerlaterne 20 dreht eine Hülse 21, die sich über zwei beabstandete vorgesehene Lager 22 und 23 gegen Teile 24 und 25 eines Lagergehäuses 26 abstützt. Dieses Lagergehäuse 26 ist an das Gehäuse 3 angeflanscht.

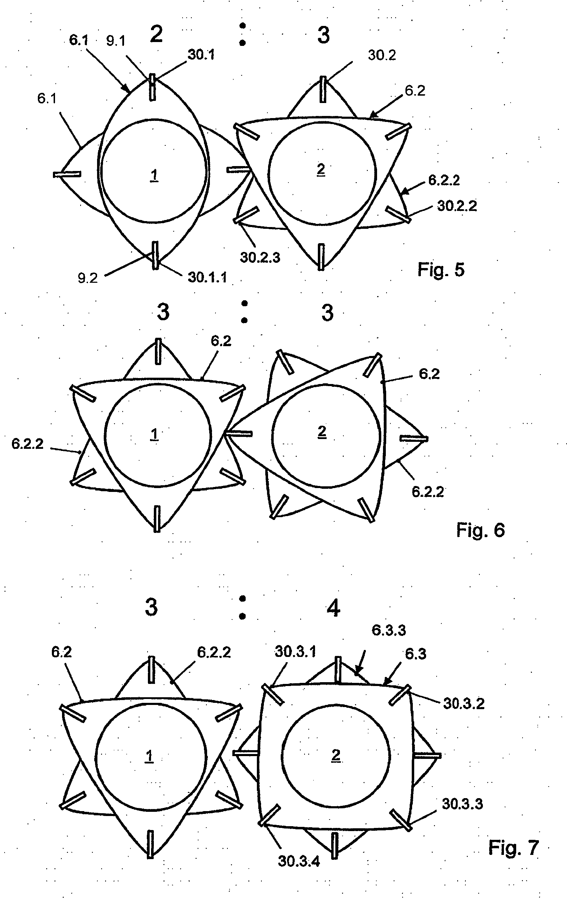

Gemäss den Figuren 5 bis 7 sind die Scheibenelemente je nach dem Verhältnis der Drehzahlgeschwindigkeit der einzelnen Wellen zueinander verschieden ausgestaltet. Gemäss Figur 5 dreht die Welle 1 in einem Drehzahlverhältnis zur Welle 2 von 2:3. Gemäss der vorliegenden Erfindung ist somit das Scheibenelement 6.1 auf der Welle 1 ellipsenförmig ausgestaltet, d.h., es weist zwei sich gegenüberliegende Spitzen 30.1 und 30.1.1 auf, die jeweils mit einem Knetbarren 9.1, 9.2 besetzt sind.

Bevorzugt direkt folgend auf das Scheibenelement 6.1 befindet sich hinter diesem ein weiteres identisches Scheibenelement 6.1.1, jedoch um 90° gedreht.

Mit diesen Scheibenelementen 6.1 und 6.1.1 auf der Welle 1 wirken weitere Scheibenelemente 6.2 und 6.2.2 auf der Welle 2 zusammen. Diese Welle 2 dreht mit dem Drehzahlverhältnis des Verhältnisses 2:3, so dass die Scheibenelemente 6.2 und 6.2.2 mit drei Spitzen 30.2, 30.2.2 und 30.2.3 ausgestaltet sind. Die Spitzen sind jeweils um 120° zueinander versetzt um die Welle 2 angeordnet. Verdreht um 60° ist die Welle 6.2.2 der Welle 6.2 zugeordnet.

In Figur 6 ist das Drehzahlverhältnis 3:3 dargestellt, wobei entsprechend auch nur Scheibenelement 6.2 und 6.2.2 vorgesehen sind.

In Figur 7 ist das Drehzahlverhältnis von 3:4 dargestellt. Dementsprechend befinden sich auf der Welle 1 Scheibenelemente 6.2 und 6.2.2, während auf der Welle 2 Scheibenelemente 6.3 und 6.3.3 mit vier Spitzen 30.3.1 bis 30.3.4 angeordnet sind. Die Scheibenelemente 6.3 und 6.3.3 sind zueinander um 45° verdreht auf der Welle 7 vorgesehen.

Entsprechend diesem Muster sind beliebige Drehzahlverhältnisse zueinander möglich.

**Bezugszeichenliste**

| | | | | | |
|---|---|---|---|---|---|
| 1 | Welle | 34 | | 67 | |
| 2 | Welle | 35 | | 68 | |
| 3 | Gehäuse | 36 | | 69 | |
| 4 | Stirnplatte | 37 | | 70 | |
| 5 | Misch- und Putzelement | 38 | | 71 | |
| 6 | Scheibenelement | 39 | | 72 | |
| 7 | Randkante | 40 | | 73 | |
| 8 | Seitenkante | 41 | | 74 | |
| 9 | Barren | 42 | | 75 | |
| 10 | Eintrag | 43 | | 76 | |
| 11 | Pfeil (Produkt) | 44 | | 77 | |
| 12 | Austragsöffnung | 45 | | 78 | |
| 13 | Deflektor | 46 | | 79 | |
| 14 | Austragsstern | 47 | | | |
| 15 | | 48 | | A | Achse |
| 16 | Zacken | 49 | | | |
| 17 | Schneide | 50 | | | |
| 18 | | 51 | | | |
| 19 | | 52 | | | |
| 20 | Lagerlaterne | 53 | | | |
| 21 | Hülse | 54 | | | |
| 22 | Lager | 55 | | | |
| 23 | Lager | 56 | | | |
| 24 | Teil | 57 | | | |
| 25 | Teil | 58 | | | |
| 26 | Lagergehäuse | 59 | | | |
| 27 | | 60 | | | |
| 28 | | 61 | | P | Mischkneter |
| 29 | | 62 | | | |
| 30 | Spitze | 63 | | r | Radius |
| 31 | | 64 | | | |
| 32 | | 65 | | | |
| 33 | | 66 | | | |

## Patentansprüche

1. Vorrichtung zur Durchführung von mechanischen, chemischen und/oder thermischen Prozessen in einem Gehäuse (3) mit Misch- und Putzelementen (5) an zumindest zwei Wellen (1,2), wobei die Misch- und Putzelemente (5) der Wellen (1,2) ineinander greifen und Scheibenelemente (6) mit Knetbarren (9) aufweisen, und wobei die Drehrichtung der Wellen (1, 2) gleichsinnig ist,
**dadurch gekennzeichnet,**
**dass** die Scheibenelemente eine Anzahl von Spitzen (30) aufweisen, die der Verhältniszahl der Drehgeschwindigkeit entspricht, und auf oder an jeder Spitze ein Knetbarren angeordnet ist.

2. Vorrichtung nach Anspruch 1, **dadurch gekennzeichnet, dass** die Drehgeschwindigkeit der schnelleren Welle max. 1.5 mal schneller als die der anderen Welle ist.

3. Vorrichtung nach Anspruch 1 oder 2, **dadurch gekennzeichnet, dass** die Knetbarren (9.1, 9.2) der Misch- bzw. Putzelemente scharfe Kanten aufweisen.

4. Vorrichtung nach wenigstens einem der vorhergehenden Ansprüche, **dadurch gekennzeichnet, dass** Knetbarren (9.1,9.2) auf den Misch- bzw. Putzelementen versetzt angeordnet sind.

5. Vorrichtung nach wenigstens einem der vorhergehenden Ansprüche, **dadurch gekennzeichnet, dass** zumindest eine Welle (1, 2) aktiv heiz- oder kühlbar ist.

6. Vorrichtung nach wenigstens einem der vorhergehenden Ansprüche, **dadurch gekennzeichnet, dass** zumindest eine Welle (1,2) axial in zwei unterschiedlichen Temperierzonen aufgeteilt ist.

7. Vorrichtung nach wenigstens einem der vorhergehenden Ansprüche, **dadurch gekennzeichnet, dass** auf zumindest einer Welle (1, 2) die jeweiligen Scheibenelemente (6) aufeinanderfolgend ohne Abstand verdoppelt, jedoch verdreht zueinander vorgesehen sind.

8. Vorrichtung nach Anspruch 7, **dadurch gekennzeichnet, dass** die Verdrehung um einen Bogenmass von 360° dividiert durch die Verhältniszahl der Geschwindigkeit erfolgt.

## Claims

1. A device for carrying out mechanical, chemical and/or thermal processes in a housing (3) with mixing and cleaning elements (5) on at least two shafts (1, 2), wherein the mixing and cleaning elements (5) of the shafts (1, 2) mesh with one another and have disc elements (6) with kneader bars (9),
and wherein the direction of rotation of the shafts (1, 2) is the same,
**characterised in that**
that the disc elements have a number of tips (30) which corresponds to the ratio of the speed of rotation, and a kneader bar is arranged on each tip.

2. A device according to Claim 1, **characterised in that** the speed of rotation of the faster shaft is max. 1.5 times faster than that of the other shaft.

3. A device according to Claim 1 or 2, **characterised in that** the kneader bars (9.1, 9.2) of the mixing or cleaning elements have sharp edges.

4. A device according to at least one of the preceding claims, **characterised in that** kneader bars (9.1, 9.2) are arranged offset on the mixing or cleaning elements.

5. A device according to at least one of the preceding claims, **characterised in that** at least one shaft (1, 2) can be actively heated or cooled.

6. A device according to at least one of the preceding claims, **characterised in that** at least one shaft (1, 2) is divided axially into two different temperature control zones.

7. A device according to at least one of the preceding claims, **characterised in that** on at least one shaft (1, 2) the respective disc elements (6) are provided in succession without any spacing, doubled but turned relative to each other.

8. A device according to Claim 7, **characterised in that** the twisting takes place by a radian measure of 360° divided by the ratio of the speed.

## Revendications

1. Dispositif de mise en oeuvre de processus mécaniques, chimiques et/ou thermiques dans un boîtier (3) avec des éléments de mélange et de nettoyage (5) sur au moins deux arbres (1, 2), dans lequel les éléments de mélange et de nettoyage (5) des arbres (1, 2) s'engagent l'un dans l'autre et présentent des éléments de disque (6) avec des barres de pétrissage (9),
et dans lequel le sens de rotation des arbres (1, 2) est dans le même sens, Z,
**caractérisé par le fait que** les éléments de disque présentent un nombre de pointes (30) qui correspond au nombre de rapport de la vitesse de rotation, et que sur ou à chaque pointe est disposée une barre de pétrissage.

2. Dispositif selon la revendication 1, **caractérisé par le fait que** la vitesse de rotation de l'arbre le plus rapide est de maximum 1,5 fois plus rapide que celle de l'autre arbre.

3. Dispositif selon la revendication 1 ou 2, **caractérisé par le fait que** les barres de pétrissage (9.1, 9.2) des éléments de mélange ou de nettoyage présentent des arêtes vives.

4. Dispositif selon au moins l'une des revendications précédentes, **caractérisé par le fait que** les barres de pétrissage (9.1, 9.2) sont disposées décalées sur les éléments de mélange ou de nettoyage.

5. Dispositif selon au moins l'une des revendications précédentes, **caractérisé par le fait qu'**au moins un arbre (1, 2) peut être activement chauffé ou refroidi.

6. Dispositif selon au moins l'une des revendications précédentes, **caractérisé par le fait qu'**au moins un arbre (1, 2) est divisé axialement en deux zones de trempe différentes.

7. Dispositif selon au moins l'une des revendications précédentes, **caractérisé par le fait que** sur au moins un arbre (1, 2) les éléments de disque respectifs (6) sont prévus doublés successivement sans distance entre eux, toutefois tournés l'un par rapport à l' autre.

8. Dispositif selon la revendication 7, **caractérisé par le fait que** la rotation a lieu d'une masse d'arc de 360° divisée par le nombre de rapport de la vitesse.
